# EUROPEAN PATENT SPECIFICATION

(11) **EP 0 725 882 B1**
(45) Date of publication and mention of the grant of the patent: **23.09.1998**
(21) Application number: 94900334.7
(22) Date of filing: 09.11.1993
(51) Int. Cl.: E06B 3/82, B32B 29/00

(54) **DOOR MAINLY INTENDED AS AN OUTER DOOR**
AUSSENTÜR
PORTE EXTERIEURE

(30) Priority: 12.11.1992 SE 9203376
(43) Date of publication of application: 14.08.1996
(73) Proprietor: SWEDOOR AB, 265 81 Astorp (SE)
(72) Inventor: BRESMAN, Jonas, S-260 60 Kvidinge (SE)
(74) Representative: Hammond, Andrew David
(86) International application number: SE9300945
(87) International publication number: WO9411608

(56) References cited:
- SU-A- 710 830
- US-A- 3 798 117
- DERWENT'S ABSTRACT, No. 20885 D/12, week 8112; & SU,A,710 830 (WOOD-WORKING IND), 28 January 1980.

## Description

### TECHNICAL FIELD:

The present invention relates to a door and primarily a door which is intended to be used as an outer door in houses, apartment houses, outbuildings etc.

### PRIOR ART:

Doors which consist of a body of for example insulation fibre board and having a surface layer of some other material on one or both sides are well known. If these are to be used as outer doors special demands are put on them, they are i.a. often provided with an aluminium plate or a steel plate under the surface layer and the surface layer is then usually glued to the plate. As the surface layer it is usual to use for example gabon veneer, due to the good outdoor properties of this material. This veneer can also be glazed and painted and it is used both on the outer side and inner side of an outer door for example.

It is also commonly known to use so-called MDF or HDF board for painted outer doors. MDF board consists of wood fibres which have been glued together with a low content of binder. This material absorbs a great deal of paint when being painted and it is not completely resistant for outdoor use. HDF board is the same material as MDF board but pressed harder to decrease the absorbtion of paint when the surface is treated.

One can also use kraft paper which has been impregnated with a phenol resin as the surface layer. This is then 1 mm or thinner and is used on for instance plywood for painted house facades.

US Patent 3,798,117 describes a laminate comprising a pigmented melamine resin modified nitrile rubber impregnated base and superimposed film. This laminate is also used as door-coverings and the like. The resin consists of several compounds and the laminate is mainly designed for in-house use.

The Russian patent SU-A-710830 describes a decorative two layer paper plastic material for use on furniture which are intended for in-door use. The laminate is made soft and very thin so that it can be easily glued on furniture having complicated contures.

### THE PROBLEM:

The best of the above mentioned products is a surface plate of gabon. This material is however of the type coming from the rain forests so that attempts are being made to come away from this kind of wood with the aim of not contributing to the destruction of the rain forests.

Surface plates which are based on MDF or HDF board are not sufficiently resistant for outdoor use and the movements of the material due to humidity and changes in temperature are relatively large.

One has therefore tried to go further with the idea of using phenolic resin impregnated kraft paper and make a surface layer consisting of a laminate of such paper. Such laminates exist at present in the trade and are used as wall covers, table plates and the like. These materials which per se have good properties have, however, the disadvantage that they cannot be glued to, for example, an aluminium plate using conventional wood glues which usually contain water. The water in the glue is not absorbed but remains in the joint which disturbs the gluing process. The laminate is too dense and can be compared with a plastic material.

### THE SOLUTION:

It has therefore long been a desire to solve the above problem and one has according to the invention brought about a door which is primarily intended as an outer door comprising a body of for example insulating fibre board and a surface layer on one or both sides, said door being characterized in that the surface layer on at least one side consists of a laminate of paper sheets soaked with a curable resin which consists of a phenolic resin, a melamine resin or a carbamide resin reinforced with a melamine resin and the laminate has been produced by curing under low pressure, preferably about 25 kg/cm², and with a high content of resin of about 30-35 weight %.

The preferred pressure during pressing is in the order of 25 kg/cm² but according to the invention it may suitably lie between 20 and 30 kg/cm².

The surface layer according to the invention can be glued to a metal plate of for example aluminium or steel.

The surface layer according to the invention can be glued with conventional wood glues such as a melamine resin glue, a PVAc glue, a carbamide resin glue reinforced with melamine, a polyurethane glue, a phenolresorcinol glue, a phenol resin glue or an epoxy glue.

### PREFERRED EMBODIMENT:

The surface layer according to the invention is produced by impregnating for example four sheets of kraft paper having a paper thickness of approximately 1 mm and a binder content of 30-35 weight % and pressing at a pressure of 25 kg/cm² and a temperature of about 160°C. The glue used consisted of a phenol resin binder. The press time was about 5 minutes and a laminate having a thickness of approximately 2,5 mm was obtained. This laminate was glued to an aluminium plate having a thickness of 0,4-0,5 mm which was the surface of the door body. No surface treatment or priming of the aluminium surface was necessary. The other side of the door which was intended to be the inner side was covered with a 3,0 mm thick plate of fibre board. Even on this side a 0,5 mm aluminium plate was attached to the body in advance. If desired the inner side can also be covered with the same laminate as the outer side of the door.

An attempt with a pressure of 10 kg/cm² was made when manufacturing the laminate, but it turned out that this laminate was easily delaminated later.

A second attempt was made with a pressure of 80 kg/cm² whereby a denser and harder laminate was obtained. This laminate could however not be glued to the plate when glue containing water or even other solvents such as alcohol was used.

The temperature at curing was, as stated above, about 160°C. This is a convenient temperature for phenol resin binders but if for example a melamine resin binder or carbamide binder reinforced with melamine were used a lower temperature could be used. The maximum temperature in the process should be about 200°C.

The above-mentioned pressing time of 5 minutes can be varied depending on various factors, for example the temperature. At lower temperature, for example 145°C, 7 minutes pressing time is needed. The pressing time is also dependent on the thickness of the laminates used and how many laminates are pressed at one time. The pressing time is mainly dependent on obtaining a sufficiently high temperature throughout the product.

By the present invention a door has thus been achieved which is very suitable as an outer door, in which one has used conventional and environmentally friendly materials and which is simple to produce and maintain. If one so wishes, the laminate can be veneer covered and/or glazed.

The invention is not limited to the embodiment shown but can be varied in different ways in the scope of the patent claims.

## Claims

1. Door primarily intended as an outer door comprising a body of for example insulation fibre board and a surface layer on one or both sides, **characterized in** that the surface layer on at least one of the sides consists of a laminate of paper sheets soaked with a curable resin which is a non-modified resin of phenol, melamine or melamine reinforced carbamide, which laminate has been produced by curing under a low pressure, preferably below about 25 kg/cm², and which has a high resin content of about 30-35 weight %.

2. Door according to any one of the claims 1, **characterized in** that the pressure is between 20 kg/cm² and 30 kg/cm².

3. Door according to any one of the claims 1 or 2, **characterized in** that the surface layer is glued against a metal plate of for example aluminium or steel.

4. Door according to any one of the claims 1-3, **characterized in** that the surface layer has been glued on by means of conventional wood glues, such as melamine resin glue, PVAc glue, carbamide resin reinforced with melamine glue, polyurethane glue, phenolresorcinol glue, phenol resin glue or epoxy glue.

## Patentansprüche

1. Tür, die hauptsächlich als Außentür dienen soll, mit einem Körper beispielsweise aus einer Isolations-faserplatte und einer Oberflächenschicht auf einer oder auf beiden Seiten, **dadurch gekennzeichnet**, daß die Oberflächenschicht auf wenigstens einer der Seiten aus einem Laminat aus Papierbögen besteht, die mit einem härtbaren Harz getränkt sind, das ein nicht modifiziertes Harz aus Phenol, Melamin oder mit Melamin verstärktes Carbamid ist, wobei das Laminat durch Härten bei niedrigem Druck, zweckmäßig unterhalb von ungefähr 25 kg/cm², erzeugt worden ist und einen hohen Harzgehalt von ungefähr 30-35 Gew.-% besitzt.

2. Tür nach Anspruch 1,
**dadurch gekennzeichnet**, daß der Druck zwischen 20 kg/cm² und 30 kg/cm² liegt.

3. Tür nach irgendeinem der Ansprüche 1 oder 2,
**dadurch gekennzeichnet**, daß die Oberflächenschicht auf eine Metallplatte beispielsweise aus Aluminium oder Stahl geleimt ist.

4. Tür nach irgendeinem der Ansprüche 1-3,
**dadurch gekennzeichnet**, daß die Oberflächenschicht mittels herkömmlicher Holzleime wie etwa Melaminharz-Leim, PVAc-Leim, mit Melamin verstärkter Carbamidharz-Leim, Polyurethan-Leim, Phenolresorcinol-Leim, Phenolharz-Leim oder Epoxid-Leim angeleimt worden ist.

## Revendications

1. Porte essentiellement destinée à être utilisée comme porte extérieure, comprenant un corps formé par exemple d'un panneau de fibres d'isolation et une couche de surface sur l'un des deux côtés ou les deux, caractérisée en ce que la couche de surface de l'un des côtés au moins est constituée d'un stratifié de feuille de papier imprégné d'une résine durcissable qui est une résine non modifiée de phénol, de mélamine ou de carbamide renforcée de mélamine, le stratifié ayant été produit par durcissement à basse pression, de préférence inférieure à 25 kg/cm² environ, et ayant une teneur élevée en résine d'environ 30 à 35 % en poids.

2. Porte selon la revendication 1, caractérisée en ce que la pression est comprise entre 20 et 30 kg/cm².

3. Porte selon l'une quelconque des revendications 1 et 2, caractérisée en ce que la couche de surface est collée contre une plaque métallique par exemple d'aluminium ou d'acier.

4. Porte selon l'une quelconque des revendications 1 à 3, caractérisée en ce que la couche de surface a été collée par des colles à bois classiques telles qu'une colle de résine mélamine, une colle de PVAc, une colle de résine de carbamide renforcée de mélamine, une colle de polyuréthanne, une colle de phénolrésorcinol, une colle de résine phénolique ou une colle époxyde.
